# EUROPÄISCHE PATENTSCHRIFT

(11) **EP 0 720 626 B1**
(45) Veröffentlichungstag und Bekanntmachung des Hinweises auf die Patenterteilung: **18.06.1997**
(21) Anmeldenummer: 94928326.1
(22) Anmeldetag: 08.09.1994
(51) Int. Cl.: C08F 2/24, C09D 157/00

(54) **VERFAHREN ZUR HERSTELLUNG VON WÄSSRIGEN POLYMERDISPERSIONEN, NACH DIESEM VERFAHREN HERGESTELLTE WÄSSRIGE POLYMERDISPERSIONEN UND VERWENDUNG DIESER POLYMERDISPERSIONEN**
PROCESS FOR PRODUCING AQUEOUS POLYMER DISPERSIONS; AQUEOUS POLYMER DISPERSIONS PRODUCED USING THIS PROCESS, AND USE OF THESE POLYMER DISPERSIONS
PROCEDE DE FABRICATION DE DISPERSIONS POLYMERES AQUEUSES, DISPERSIONS POLYMERES AQUEUSES OBTENUES SUIVANT CE PROCEDE ET UTILISATION DE CES DISPERSIONS POLYMERES

(30) Priorität: 21.09.1993 DE 4332005
(43) Veröffentlichungstag der Anmeldung: 10.07.1996
(73) Patentinhaber: BASF Lacke + Farben AG, 48165 Münster-Hiltrup (DE)
(72) Erfinder: ANTONIETTI, Markus, D-35043 Marburg-Schröck (DE)
(86) Internationale Anmeldenummer: EP9403014
(87) Internationale Veröffentlichungsnummer: WO9508578

(56) Entgegenhaltungen:
- DE-A- 1 645 647

## Beschreibung

Die Erfindung betrifft ein Verfahren zur Herstellung von wäßrigen Polymerdispersionen, bei dem
(1) in einem ersten Arbeitsschritt aus
   (A) einem Emulgator oder einer Mischung aus Emulgatoren,
   (B) einem wasserunlöslichen Radikalbildner oder einer Mischung aus wasserunlöslichen Radikalbildnern
   (C) einem radikalisch polymerisierbaren Monomer oder einer Mischung aus radikalisch polymerisierbarem Monomeren und
   (D) Wasser
   eine Emulsion hergestellt wird und
   (2) in einem zweiten Arbeitsschritt die Komponente (C) polymerisiert wird.

Die Erfindung betrifft auch wäßrige Polymerdispersionen, die nach diesem Verfahren herstellbar sind sowie die Verwendung dieser Polymerdispersionen zur Herstellung von besonders umweltverträglichen Produkten, Kosmetika, Arzneimitteln und medizinische Diagnostika.

Das oben beschriebene Verfahren ist bekannt. Bei geeigneter Auswahl der Emulgatoren ermöglicht es die Herstellung von wäßrigen Polymerdispersionen, die Polymerteilchen mit sehr kleinen Teilchengrößen (5 bis 50 nm) und enger Teilchengrößenverteilung enthalten (vgl. z.B. Antonietti, M.; Bremser, W.; Muschenborn, D.; Rosenauer, C.; Schupp, B.; Schmidt, M.; Macromolecules 1991, 24, 6636). Die enorme innere Oberfläche derartiger Polymerdispersionen kann in vielfältiger Weise chemisch modifiziert und an den gewünschten Anwendungszweck angepaßt werden (vgl. z.B. Antonietti, M.; Lohmann, S.; von Niel, C.; Macromolecules 1992, 25, 1139).

Nachteiligerweise enthalten die nach dem oben beschriebenen Verfahren bislang hergestellten Polymerdispersionen toxische, kationische Tenside. Der vorliegenden Erfindung liegt die Aufgabe zugrunde, ein Verfahren zur Herstellung von waßrigen Polymerdispersionen der oben beschriebenen Art bereitzustellen, mit dem wäßrige Polymerdispersionen herstellbar sind, die diesen Nachteil nur noch in vermindertem Ausmaß oder gar nicht mehr aufweisen.

Diese Aufgabe konnte überraschenderweise durch Bereitstellung eines Verfahrens der oben beschriebenen Art gelöst werden, das dadurch gekennzeichnet ist, daß als Komponente (A) eine Mischung aus
(a1) einem natürlich vorkommenden, zwitterionischen Phosphatid oder einer Mischung aus natürlich vorkommenden zwitterionischen Phosphatiden und
(a2) Cholsäure und/oder einem Salz der Cholsäure und/oder Desoxycholsäure und/oder einem Salz der Desoxycholsäure und/oder Ricinolsäure und/oder einem Salz der Ricinolsäure und/oder Ölsäure und/oder einem Salz der Ölsäure
eingesetzt wird.

Als Komponente (a1) kann im Prinzip jedes natürlich vorkommende, zwitterionische Phoshatid oder eine Mischung aus natürlich vorkommenden zwitterionischen Phosphatiden eingesetzt werden. Zur der als Komponente (a1) eingesetzten Klasse von Naturstoffen rechnet man fettähnliche Triglyzeride, die zwei langkettige Fettsäuren und einen Phosphorsäurerest, an den noch eine Base gebunden ist, enthalten. Sie kommen in allen tierischen und pflanzlichen Zellen, vor allem im Gehirn, im Herzen, in der Leber, im Eidotter sowie in der Sojabohne vor. Als Komponente (a1) werden vorzugsweise Kephalin und Lecithin eingesetzt. Sowohl Kephalin als auch Lecithin bestehen aus einem Gemisch von Phosphatiden, die verschiedene gesättigte und ungesättigte Fettsäuren enthalten, z.B. Palmitin-, Stearin-, Öl-, Linol- und Linolensäure. Kephalin und Lecithin können die in den Strukturformeln I und II aufgeführten chemischen Strukturen zugeordnet werden, wobei R und R' jeweils für eine gesättigte oder ungesättigte Fettsäure stehen.

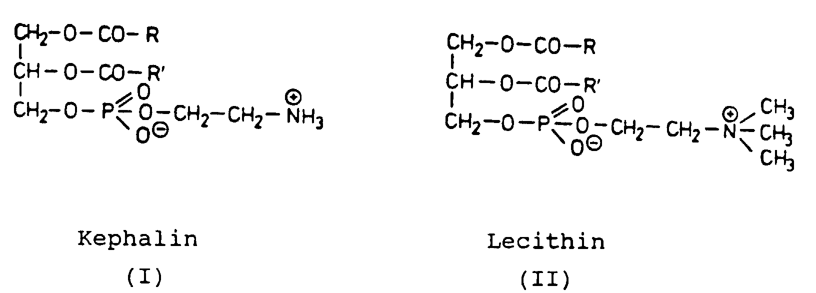

Als Komponente (a1) wird vorzugsweise Lecithin eingesetzt.

Als Komponente (a2) wird Cholsäure und/oder ein Salz der Cholsäure und/oder Desoxycholsäure und/oder ein Salz der Desoxycholsäure und/oder Ricinolsäure und/oder ein Salz der Ricinolsäure und/oder Ölsäure und/oder ein Salz der ölsäure eingesetzt. Die chemische Struktur der Cholsäure und Desoxycholsäure ist in den Strukturformeln III und IV dargestellt.

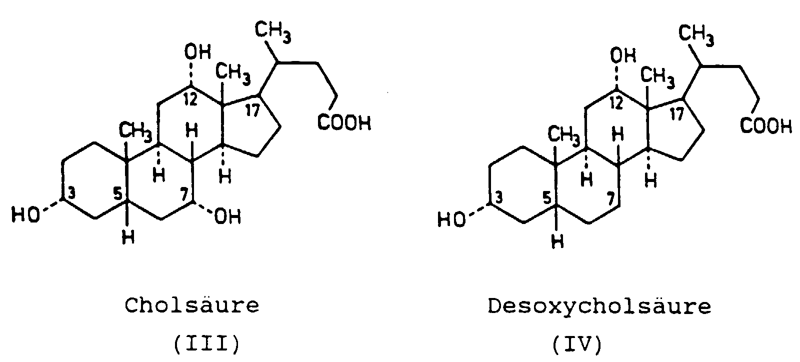

Wenn als Komponente a2) Salze der Cholsäure, Desoxycholsäure, Ricinolsäure oder ölsäure eingesetzt werden, dann werden vorzugsweise Salze eingesetzt, die physiologisch verträglich sind (z.B. Natriumsalze). Als Komponente (a2) wird vorzugsweise ein Salz der Cholsäure, besonders bevorzugt das Natriumsalz der Cholsäure, ein Salz der Ölsäure, besonders bevorzugt das Natriumsalz der ölsäure oder eine Mischung aus einem Salz der Cholsäure, insbesondere dem Natriumsalz der Cholsäure und einem Salz der ölsäure, insbesondere dem Natriumsalz der Ölsäure eingesetzt.

Ricinolsäure ist eine andere Bezeichnung für 12-Hydroxyölsäure. Die erfindungsgemäß eingesetzte Komponente (A) besteht vorzugsweise aus 5 bis 95 Gew.-% der Komponente (a1) und 95 bis 5 Gew.-% der Komponente (a2). Besonders bevorzugt wird als Komponente (A) eine Mischung aus 15 bis 50 Gew.-% Lecithin und 85 bis 50 Gew.-% des Natriumsalzes der Cholsäure oder des Natriumsalzes der Ölsäure oder einer Mischung aus dem Natriumsalz der Cholsäure und dem Natriumsalz der Ölsäure eingesetzt. Wenn als Komponente (a2) das Natriumsalz der ölsäure eingesetzt wird, dann wird der Lecithingehalt der Komponente (A) besonders bevorzugt auf 25 bis 35 Gew.-% eingestellt.

Die Erfindung betrifft auch die Verwendung der Komponente (A) als Emulgator zur Herstellung von wäßrigen Polymerdispersionen, die durch radikalische Emulsionspolymerisation von radikalisch polymerisierbaren Monomeren bzw. Mischungen aus radikalisch polymerisierbaren Monomeren herstellbar sind.

Als Komponente (B) kann im Prinzip jeder für die Herstellung von wäßrigen Polymerdispersionen geeignete wasserunlösliche Radikalbildner oder eine Mischung aus wasserunlöslichen Radikalbildnern eingesetzt werden. Als Beispiele für einsetzbare wasserunlösliche Radikalbildner werden genannt: Azobis(isobutyronitril), tert.-Butylperethylhexanoat, Benzoylperoxid, tert.-Butylperoctoat, tert.-Butylperbenzoat, 2,2'-Azo-bis-(2-cyanopropan) und 1,1'-Azo-bis-cyclohexancarbonitril.

Als Komponente (C) kann im Prinzip jedes radikalisch polymerisierbare Monomer oder eine Mischung aus radikalisch polymerisierbaren Monomeren eingesetzt werden. Die Auswahl der Komponente (C) richtet sich nach dem Einsatzzweck der Polymerdispersion. Wenn die Polymerdispersionen beispielsweise zur Herstellung von Lacken verwendet werden sollen, sind die radikalisch polymerisierbaren Monomeren so auszuwählen, daß die unter Verwendung der erfindungsgemäßen wäßrigen Polymerdispersionen hergestellten Lackfilme die gewünschten Eigenschaften haben. Die für die Herstellung von hochwertigen Lackfilmen einzuhaltenden Auswahl regeln für die Auswahl der eingesetzten Monomere sind dem Fachmann gut bekannt und müssen an dieser Stelle nicht näher beschrieben werden. Entsprechendes gilt für den Fall, daß die erfindungsgemäß hergestellten Polymerdispersionen für kosmetische oder pharmazeutische Zwecke eingesetzt werden sollen. Bei der Auswahl der radikalisch polymerisierbaren Monomeren ist insbesondere darauf zu achten, daß die nach der Polymerisation erhaltenen Makromoleküle die für eventuell nachfolgende chemische Modifizierungen notwendigen funktionellen Gruppen, wie z.B. Hydroxylgruppen, Aminogruppen, Carboxylgruppen, Epoxidgruppen usw. enthalten. Als radikalisch polymerisierbare Monomere können beispielsweise eingesetzt werden:
(i) aliphatische oder cycloaliphatische Ester der Acrylsäure oder Methacrylsäure oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren sowie
(v) polyungesättigte Monomere, insbesondere ethylenisch ungesättigte Monomere.

Die oben genannten Monomere werden vorzugsweise als Mischungen eingesetzt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen a,ß-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 3-Hydroxybutylacrylat oder 4-Hydroxybutyl(meth)acrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 18 Kohlenstoffatomen im Molekül eingesetzt werden. Als Beispiele für solche Säuren werden Ethacrylsäure, Crotonsäure, Maleinsäure, Fumarsäure, Itaconsäure und ungesättigte Fettsäuren, wie z. B. Ölsäure oder Linolsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponente (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)-acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff und Maleinsäurediallylester.

Bei dem erfindungsgemäßen Verfahren zur Herstellung von wäßrigen Polymerdispersionen wird in einem ersten Arbeitsschritt aus den Komponenten (A), (B), (C) und (D) Wasser eine Emulsion hergestellt und danach in einem zweiten Arbeitsschritt die Komponente (C) polymerisiert. Die Polymerisation erfolgt nach allgemein gut bekannten Bedingungen, in dem die Komponente (B) durch Energiezufuhr, insbesondere durch Erhitzen, zum Zerfall in freie Radikale angeregt wird.

Die Komponenten (A) und (C) werden vorzugsweise in einem Gewichtsverhältnis von 1:10 bis 10:1, besonders bevorzugt in einem Gewichtsverhältnis von 1:3 bis 5:1 eingesetzt.

Die nach dem erfindungsgemäßen Verfahren hergestellten wäßrigen Polymerdispersionen sind frei von toxischen, kationischen Tensiden und erlauben daher die Herstellung von besonders umweltverträglichen Produkten, z. B. Lacken und sind insbesondere auch zur Herstellung von Kosmetikas, Arzneimitteln und medizinischen Diagnostikas geeignet. Ein weiterer wichtiger Vorteil der erfindungsgemäß hergestellten Polymerdispersionen besteht darin, daß die Polymerteilchen der erfindungsgemäß hergestellten wäßrigen Polymerdispersionen sehr kleine Teilchengrößen (5 bis 50 nm) und enge Teilchengrößenverteilungen aufweisen. Die enorme innere Oberfläche der nach dem erfindungsgemäßen Verfahren hergestellten Polymerdispersionen kann in vielfältiger Weise chemisch modifiziert und an den gewünschten Anwendungszweck angepaßt werden. So können beispielsweise in bzw. an die Oberflächen der Polymerpartikel Biomoleküle eingeführt werden. Auf diese Weise können beispielsweise aktive Polymer/Enzym- oder Polymer/Antikörperhybridteilchen hergestellt werden. Die Modifizierung der nach dem erfindungsgemäßen Verfahren hergestellten Polymerdispersionen kann beispielsweise durchgeführt werden, indem (D) eine biologisch aktive Substanz oder eine Mischung aus biologisch aktiven Substanzen entweder in Stufe (1) oder nach Durchführung der Stufe (2) zugesetzt wird.

Im nachfolgenden Beispiel wird die Erfindung näher erläutert. Alle Prozent- und Mengenangaben sind als Gewichtsangaben zu verstehen soweit nicht ausdrücklich etwas anderes angegeben ist.

5,0 g Lecithin (aus Hühnerei, 90 %) werden in 100 ml destilliertem Wasser mittels eines Hochgeschwindigkeitsrührers bei Raumtemperatur dispergiert. Nach Zugabe von 6 g Natriumcholat, 10,0 g einer Mischung aus Styrol und m-Diisopropenylbenzol (molares Verhältnis: 40 : 1) und 100 mg Azo-bis(isobutyronitril) wird noch 30 Minuten lang homogenisiert.
Danach wird 16 Stunden lang gerührt und anschließend 24 Stunden lang auf 60-70°C erhitzt. Es wird eine stabile, von kationischen Tensiden freie, wäßrige Polymerdispersion erhalten, die Polymerteilchen mit einer mittleren Teilchengröße von 15 nm und enger Teilchengrößenverteilung (Wert für die Standardabweichung δ = 3,09) enthält.

## Patentansprüche

1. Verfahren zur Herstellung von wäßrigen Polymerdispersionen, bei dem
(1) in einem ersten Arbeitsschritt aus
(A) einem Emulgator oder einer Mischung aus Emulgatoren,
(B) einem wasserunlöslichen Radikalbildner oder einer Mischung aus wasserunlöslichen Radikalbildnern
(C) einem radikalisch polymerisierbaren Monomer oder einer Mischung aus radikalisch polymerisierbarem Monomeren und
(D) Wasser
eine Emulsion hergestellt wird und
(2) in einem zweiten Arbeitsschritt die Komponente (C) polymerisiert wird,
dadurch gekennzeichnet, daß als Komponente (A) eine Mischung aus
(a1) einem natürlich vorkommenden, zwitterionischen Phosphatid oder einer Mischung aus natürlich vorkommenden zwitterionischen Phosphatiden und
(a2) Cholsäure und/oder einem Salz der Cholsäure und/oder Desoxycholsäure und/oder einem Salz der Desoxycholsäure und/oder Ricinolsäure und/oder einem Salz der Ricinolsäure und/oder Ölsäure und/oder einem Salz der Ölsäure
eingesetzt wird.

2. Verfahren nach Anspruch 1, dadurch gekennzeichnet, daß als Komponente (A) eine Mischung aus (a1) 5 bis 95 Gew.-% Lecithin und (a2) 95 bis 5 Gew.-% eines Salzes der Cholsäure oder eines Salzes der ölsäure oder eine Mischung aus einem Salz der Cholsäure und einem Salz der Ölsäure eingesetzt wird.

3. Verfahren nach einem der Ansprüche 1 oder 2, dadurch gekennzeichnet, daß die Komponenten (A) und (C) in einem Gewichtsverhältnis von 1:10 bis 10:1 eingesetzt werden.

4. Verfahren nach Anspruch 3, dadurch gekennzeichnet, daß die Komponenten (A) und (C) in einem Gewichtsverhältnis von 1:3 bis 5:1 eingesetzt werden.

5. Verfahren nach einem der Ansprüche 1 bis 4, dadurch gekennzeichnet, daß
(D) eine biologisch aktive Substanz oder eine Mischung aus biologisch aktiven Substanzen entweder in Stufe (1) oder nach Durchführung der Stufe (2) zugesetzt wird.

6. Wäßrige Polymerdispersionen hergestellt nach einem der Ansprüche 1 bis 5.

7. Verwendung der wäßrigen Polymerdispersion nach Anspruch 6 zur Herstellung von Lacken.

8. Verwendung der wäßrigen Polymerdispersionen nach Anspruch 6 zur Herstellung von kosmetischen und pharmazeutischen Produkten.

9. Verwendung einer Mischung aus
(a1) einem natürlich vorkommenden, zwitterionischen Phosphatid oder einer Mischung aus natürlich vorkommenden zwitterionischen Phosphatiden und
(a2) Cholsäure und/oder einem Salz der Cholsäure und/oder Desoxycholsäure und/oder einem Salz der Desoxycholsäure und/oder Ricinolsäure und/oder einem Salz der Ricinolsäure und/oder ölsäure und/oder einem Salz der ölsäure
als Emulgator zur Herstellung von wäßrigen Polymerdispersionen, die durch radikalische Emulsionspolymerisation von radikalisch polymerisierbaren Monomeren bzw. Mischungen aus radikalisch polymerisierbaren Monomeren herstellbar sind.

## Claims

1. Process for the preparation of aqueous polymer dispersions in which
(1) in a first working step, an emulsion is prepared from
(A) an emulsifier or a mixture of emulsifiers,
(B) a water-insoluble agent which forms free radicals or a mixture of water-insoluble agents which form free radicals
(C) a monomer which can be polymerized by free radicals or a mixture of monomers which can be polymerized by free radicals and
(D) water
and
(2) in a second working step, component (C) is polymerized,
characterized in that, as component (A), a mixture of
(a1) a naturally occurring, zwitterionic phosphatide or a mixture of naturally occurring zwitterionic phosphatides and
(a2) cholic acid and/or a salt of cholic acid and/or deoxycholic acid and/or a salt of deoxycholic acid and/or ricinoleic acid and/or a salt of ricinoleic acid and/or oleic acid and/or a salt of oleic acid is employed.

2. Process according to Claim 1, characterized in that, as component (A), a mixture of (a1) 5 to 95% by weight of lecithin and (a2) 95 to 5% by weight of a salt of cholic acid or of a salt of oleic acid or a mixture of a salt of cholic acid and a salt of oleic acid is employed.

3. Process according to one of Claims 1 or 2, characterized in that components (A) and (C) are employed in a weight ratio of 1:10 to 10:1.

4. Process according to Claim 3, characterized in that components (A) and (C) are employed in a weight ratio of 1:3 to 5:1.

5. Process according to one of Claims 1 to 4, characterized in that
(D) a biologically active substance or a mixture of biologically active substances is added either in stage (1) or after stage (2) has been carried out.

6. Aqueous polymer dispersions prepared according to one of Claims 1 to 5.

7. Use of the aqueous polymer dispersion according to Claim 6 for the production of coatings.

8. Use of the aqueous polymer dispersions according to Claim 6 for the production of cosmetic and pharmaceutical products.

9. Use of a mixture of
(a1) a naturally occurring, zwitterionic phosphatide or a mixture of naturally occurring zwitterionic phosphatides and
(a2) cholic acid and/or a salt of cholic acid and/or deoxycholic acid and/or a salt of deoxycholic acid and/or ricinoleic acid and/or a salt of ricinoleic acid and/or oleic acid and/or a salt of oleic acid
as an emulsifier for the preparation of aqueous polymer dispersions which can be prepared by free radical emulsion polymerization of monomers which can be polymerized by free radicals or mixtures of monomers which can be polymerized by free radicals.

## Revendications

1. Procédé de fabrication de dispersions polymères aqueuses, lors duquel
(1) on prépare, dans une première étape de travail, une émulsion à partir
(A) d'un émulsifiant ou d'un mélange d'émulsifiants,
(B) d'un agent formant des radicaux libres, insoluble dans l'eau ou d'un mélange d'agents formant des radicaux libres, insolubles dans l'eau,
(C) d'un monomère polymérisable par voie radicalaire ou d'un mélange de monomères polymérisables par voie radicalaire et
(D) d'eau et
(2) lors duquel on polymérise, dans une deuxième étape de travail, les composants (C),
caractérisé en ce que l'on utilise, en tant que composant, (A) un mélange obtenu à partir
(a1) d'un phosphatide d'origine naturelle, de type zwitterion ou d'un mélange de phosphatides d'origine naturelle de type zwitterion et
(a2) d'acide cholique et/ou d'un sel de l'acide cholique et/ou de l'acide désoxycholique et/ou d'un sel de l'acide désoxycholique et/ou de l'acide ricinoléique et/ou d'un sel de l'acide ricinoléique et/ou de l'acide oléique et/ou un sel de l'acide oléique.

2. Procédé selon la revendication 1, caractérisé en ce que l'on utilise, en tant que composant (A), un mélange de (al) 5 à 95 % en poids de lécithine et (a2) de 95 à 5 % en poids d'un sel de l'acide cholique ou d'un sel de l'acide oléique ou d'un mélange d'un sel de l'acide cholique et d'un sel de l'acide oléique.

3. Procédé selon l'une quelconque des revendications 1 ou 2, caractérisé en ce que les composants (A) et (C) sont utilisés dans un rapport de poids de 1:10 à 10:1.

4. Procédé selon la revendication 3, caractérisé en ce que les composants (A) et (C) sont utilisés dans un rapport de poids de 1:3 à 5:1.

5. Procédé selon l'une quelconque des revendications 1 à 4, caractérisé en ce que (D) l'on ajoute une substance biologiquement active ou un mélange des substances biologiquement actives soit dans l'étape (1) soit après exécution de l'étape (2).

6. Dispersions polymères aqueuses fabriquées selon l'une quelconque des revendications 1 à 5.

7. Utilisation des dispersions polymères aqueuses selon la revendication 6 pour la fabrication de laques.

8. Utilisation des dispersions polymères aqueuses selon la revendication 6 pour la fabrication de produits cosmétiques et pharmaceutiques.

9. Utilisation d'un mélange
(a1) d'un phosphatide d'origine naturelle, de type zwitterion ou d'un mélange de phosphatides d'origine naturelle de type zwitterion et
(a2) d'acide cholique et/ou d'un sel de l'acide cholique et/ou de l'acide désoxycholique et/ou d'un sel de l'acide désoxycholique et/ou de l'acide ricinoléique et/ou d'un sel de l'acide ricinoléique et/ou de l'acide oléique et/ou un sel de l'acide oléique,
en tant qu'émulsifiant pour la fabrication de dispersions polymères aqueuses, que l'on peut fabriquer par polymérisation radicalaire en émulsion de monomères polymérisables par voie radicalaire, respectivement de mélanges de monomères polymérisables par voie radicalaire.
